# EUROPÄISCHE PATENTSCHRIFT

(11) **EP 2 586 597 B1**
(45) Veröffentlichungstag und Bekanntmachung des Hinweises auf die Patenterteilung: **10.02.2016**
(21) Anmeldenummer: 12007273.1
(22) Anmeldetag: 22.10.2012
(51) Int. Cl.: B29C 67/00, B22F 3/105

(54) **Vorrichtung zur Vermeidung von Ablagerungen an optischen Komponenten im Laser-Sintern**
Device for avoiding deposits on optical components in laser sintering
Dispositif de réduction des dépôts sur les composants optiques dans le frittage laser

(30) Priorität: 25.10.2011 DE 102011085154
(43) Veröffentlichungstag der Anmeldung: 01.05.2013
(73) Patentinhaber: Evonik Degussa GmbH, 45128 Essen (DE)
(72) Erfinder: Grebe, Maik, 44805 Bochum (DE); Hessel-Geldmann, Sigrid, 45721 Haltern am See (DE); Diekmann, Wolfgang, 45731 Waltrop (DE)

(56) Entgegenhaltungen:
- EP-A1- 1 514 622
- EP-A2- 1 839 781
- WO-A1-2005/025780
- DE-A1-102006 044 043
- US-A1- 2011 122 381

## Beschreibung

Die vorliegende Erfindung betrifft eine Vorrichtung zur schichtweisen Herstellung von dreidimensionalen Objekten, Verfahren zur schichtweisen Herstellung sowie eine Verwendung der Vorrichtung.

Die zügige Bereitstellung von Prototypen ist eine in der jüngsten Zeit häufig gestellte Aufgabe. Verfahren die dies ermöglichen werden Rapid Prototyping/ Rapid Manufacturing oder auch Additive Fabrication-Verfahren genannt. Besonders geeignet sind Verfahren, die auf der Basis von pulverförmigen Werkstoffen arbeiten, und bei denen schichtweise durch selektives Aufschmelzen und Verfestigen die gewünschten Strukturen hergestellt werden. Auf Stützkonstruktionen bei Überhängen und Hinterschnitten kann dabei verzichtet werden, da das die aufgeschmolzenen Bereiche umgebende Pulverbett ausreichende Stützwirkung bietet. Ebenso entfällt die Nacharbeit, Stützen zu entfernen. Die Verfahren sind auch für die Herstellung von Kleinserien geeignet. Die Bauraumtemperatur wird so gewählt, dass es während des Bauprozesses zu keinem Verzug der schichtweise hergestellten Strukturen kommt.

Ein Verfahren, welches besonders gut für den Zweck des Rapid Prototypings geeignet ist, ist das selektive Laser-Sintern. Bel diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel laufen ineinander und erstarren schnell wieder zu einer festen Masse. Durch wiederholtes Belichten von immer neu aufgebrachten Schichten können mit diesem Verfahren dreidimensionale Körper einfach und schnell hergestellt werden.

Das Verfahren des Laser-Sinterns (Rapid Prototyping) zur Darstellung von Formkörpern aus pulverförmigen Polymeren wird ausführlich in der Patentschriften US 6,136,948 und WO 96/06581 beschrieben. Eine Vielzahl von Polymeren und Copolymeren wird für diese Anwendung beansprucht, wie z.B. Polyacetat, Polypropylen, Polyethylen, Ionomere und Polyamid.

Andere gut geeignete Verfahren sind das SIV-Verfahren (Selektive Verbindungsinhibition) wie in WO 01/38061 beschrieben, oder ein Verfahren wie in EP 1015214 beschrieben. Beide Verfahren arbeiten mit einer flächigen Infrarotheizung zum Aufschmelzen des Pulvers. Die Selektivität des Aufschmelzens wird bei ersterem durch die Auftragung eines Inhibitors, beim zweiten Verfahren durch eine Maske erreicht. Ein weiteres Verfahren ist in DE 10311438 beschrieben. Bei diesem wird die zum Verschmelzen benötigte Energie durch einen Mikrowellengenerator eingebracht und die Selektivität wird durch Auftragen eines Suszeptors erreicht. Ein weiteres Verfahren wird in WO 2005/105412 beschrieben. Bei diesem wird die zum Verschmelzen benötigte Energie durch elektromagnetische Strahlung eingebracht und die Selektivität wird durch Auftragen eines Absorbers erreicht. EP 1514622 beschreibt ebenfalls eine Vorrichtung zur Herstellung eines dreidimensionalen Formkörpers durch Verfestigen von Schichten eines Pulvens mittels elektromagnetischer Strahlung.

Ein Problem bei den im Stand der Technik beschriebenen Verfahren ist, dass Bestandteile des polymeren Pulvers freigesetzt bzw. verdampft werden, wenn die polymeren Pulver erhitzt werden. Die freigesetzten Stoffe bzw. Dämpfe stören den Prozess, da diese sich an wichtigen Bauteilen wie Linsen, Pyrometer oder Maske absetzen und deren Funktion beeinträchtigen.

Bei den freigesetzten Bestandteilen handelt es sich oft um Monomere, Oligomere oder Additive, die einen deutlich niedrigeren Schmelzpunkt im Vergleich zu dem Polymer haben. Der Gehalt von Monomeren und Oligomeren im Polymer kann reduziert werden, dies erfordert jedoch einen erheblichen zusätzlichen Aufwand. Zudem verbleiben meist immer noch Reste von Stoffen im Polymer welche bei Erhitzung freigesetzt werden können.

Aufgabe der vorliegenden Erfindung ist es daher, die Ablagerung von Dämpfen, die während der schichtwelsen Herstellung von dreidimensionalen Objekten entstehen, an empfindlichen Bauteilen wie z. B. Linsen zu verhindern und somit den Prozess zur schichtweisen Herstellung von dreidimensionalen Objekten zu verbessern.

Ein erster Gegenstand der vorliegenden Erfindung ist eine Vorrichtung nach Anspruch 1 zur schichtweisen Herstellung von dreidimensionalen Objekten.

Wesentlich für die vorliegende Erfindung ist die außerhalb des Bauraums befindliche Abscheideoberfläche, an der sich die bei dem Aufschmelzen des polymeren Werkstoffs entstehenden Dämpfe mittels gezielter Kondensation absetzen können. Hierzu ist die Abscheideoberfläche gekühlt. Die Vorrichtung weist bevorzugt ein Heizelement zur Temperierung des Bauraums auf. Damit kann der Bauraum beispielsweise auf die für die Herstellung des dreidimensionalen Objektes ideale Temperatur eingestellt werden.

Überraschend wird gefunden, dass mit einer Vorrichtung mit gekühlten Oberflächen, an denen die Dämpfe erkalten und sich ablagern können, die Ablagerung an empfindlichen Bauteilen einer Vorrichtung zur Herstellung von dreidimensionalen Objekten verhindert werden kann. Bei Vorrichtungen nach dem bisherigen Stand der Technik wird versucht, mit einer großvolumigen Spülung von Inertgas die Ablagerung an empfindlichen Bauteilen zu vermindern. Der große Volumenstrom von einem Inertgas stört aber die Temperaturführung bei der Herstellung von dreidimensionalen Objekten, indem das zu erstellende Objekt und das umliegende Pulver zu stark abgekühlt werden. Gerade bei der Verarbeitung von Polymerpulvern kommt es dann zu einem starken Verzug des zu erstellenden Objekts.

Insgesamt kann bei Vorrichtungen nach dem Stand der Technik die Ablagerung nur unvollständig verhindert werden. Zudem setzen sich die Dämpfe ungehindert an Bauteilen ab, welche nicht durch die Spülung von Inertgas geschützt sind. Dies erfordert einen erhöhten Reinigungsaufwand nach dem Bauprozess zur Herstellung von dreidimensionalen Objekten. Letztendlich ist bei den dem Fachmann bekannten Vorrichtungen die Verarbeitung von polymeren Werkstoffen mit erhöhter Neigung zur Ausbildung von Dämpfen kaum möglich. Die erfindungsgemäße Vorrichtung erhöht die Prozesssicherheit, da die Ablagerung an empfindlichen Bauteilen verhindert wird. Die erfindungsgemäße Vorrichtung erlaubt somit auch die Verarbeitung von polymeren Werkstoffen mit erhöhter Neigung zur Ausbildung von Dämpfen beim Sintern bzw. Schmelzen wie z. B. Polyamid 6 oder Polyamid 6.6. Der Reinigungsaufwand wird somit wesentlich reduziert. Auf Grund der erfindungsgemäßen Abscheideoberflächen (9, 13, 18) kommt die erfindungsgemäße Vorrichtung ohne eine großvolumige Spülung des Bauraums (19) mit Inertgas aus. Vorzugsweise erfolgt die Ablagerung der Dämpfe durch Kühlung nur durch die Abscheideoberflächen (9, 13, 18).

In der vorliegenden Erfindung weist die Vorrichtung eine Abscheideoberfläche außerhalb des Bauraums auf, wobei gewährleistet ist, dass die Bauraumatmosphäre bei der Herstellung der dreidimensionalen Objekte an der außerhalb des Bauraums liegenden Abscheideoberfläche vorbeigeführt wird. In der einfachsten Ausführungsform weist die Vorrichtung dazu eine Rohrleitung auf, mit der das Gas der Bauraumatmosphäre aus dem Bauraum geleitet wird, anschließend an der Abscheideoberfläche (13), an der die Dämpfe kondensieren, vorbeigeführt wird und anschließend das Gas wieder in den Bauraum geleitet wird.

Die für die Abscheidung der Dämpfe vorgesehen Abscheideoberfläche ist insbesondere größer als 10000 mm², vorzugsweise größer als 20000 mm², ganz besonders bevorzugt größer als 40000 mm². Auf diese Weise wird eine für die Abscheidung entstehender Dämpfe ausreichende Abscheidoberfläche zur Verfügung gestellt.

Die Abscheideoberfläche kann jede beliebige geometrische Form aufweisen. Weiterhin kann es sich hierbei um einen kompakten Körper handeln, dessen Außenflächen als Abscheideoberflächen dienen. Von Vorteil sind Abscheideoberflächen auf Basis geometrischer Körper, bei denen das Oberfläche-zu-Volumen-Verhältnis (A/V-Verhältnis) größer als 1 mm⁻¹ ist. Besonders vorteilhaft basieren die Abscheideoberflächen auf Körpern, die ein A/V-Verhältnis von über 2 mm⁻¹ haben, ganz besonders bevorzugt von über 4 mm⁻¹ haben. Darüber hinaus ist es auch vorteilhaft möglich, wenn es sich bei der Abscheideoberfläche um einen Hohlkörper handelt, insbesondere wenn der Hohlkörper mit einer gitterartigen Füllung versehen ist. Die gitterartige Füllung sorgt für eine ausreichend große Oberfläche für die Abscheidung entstehender Dämpfe. Vorzugsweise weist die Abscheideoberfläche eine innen- oder aussenliegende Kühlung auf, die die Temperatur der Abscheideoberfläche auf die gewünschte Temperatur einstellt. Im Falle von kompakten Körpern kann die Kühlung beispielsweise im Körper selbst vorliegen, beispielsweise in Form eines Kühlmittel fördernden Leitungssystems. Es ist darüber hinaus auch möglich, dass die Kühlung der Abscheideoberfläche durch von außen anliegende Kühlelemente erfolgt. Bevorzugt sollte der Emissionsgrad der Oberflächen kleiner als 0,90 sein. Besonders bevorzugt sollte der Emissionsgrad der Oberflächen kleiner als 0,70 sein. Ganz besonders bevorzugt sollte der Emissionsgrad der Oberflächen kleiner als 0,50 sein.

Die Abscheideoberfläche kann sich grundsätzlich an einer beliebigen Position des Bauraums befinden, vorzugsweise ist die Abscheidoberfläche in räumlicher Nähe zu den zu schützenden Bauteilen angebracht, insbesondere in der Nähe der Linse oder des Pyrometers.

Die erfindungsgemäße Vorrichtung wird im Folgenden anhand der Abbildungen erläutert.

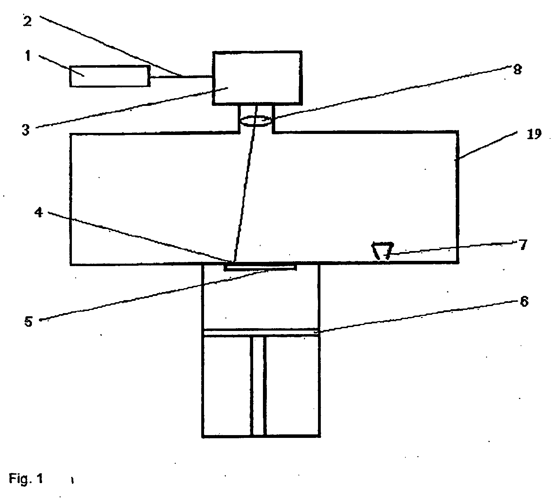

Fig. 1 zeigt den prinzipiellen Aufbau einer Vorrichtung zur Herstellung von dreidimensionalen Objekten gemäß dem Stand der Technik. Das Bauteil wird zentral im Baufeld positioniert. Aus einem Laser (1) wird der Laserstrahl (2) mittels eines Scannsystems (3) durch die Linse (6) auf eine temperierte und inertisierte (Stickstoff) Pulveroberfläche (4) des zu bildenden Objekts (5) gelenkt. Die Linse hat dabei die Aufgabe, die restlichen optischen Komponenten wie z. B die Spiegel des Scanners von der Bauraumatmosphäre zu trennen. Oft wird die Linse als F-Theta Linsensystem ausgeführt, um einen möglichst homogenen Fokus über dem gesamten Arbeitsfeld zu gewährleisten. Innerhalb des Bauraums befindet sich die Aufbringvorrichtung (7) zum Aufbringen des zu verfestigenden Materials auf die Bauplattform (6). Beispielsweise kann die Aufbringeinrichtung in Form einer Rinne oder eines Trichters vorliegen, die mittels eines geeigneten Verschiebeantriebs innerhalb des Bauraums (19) und über die Bauplattform (6) verschoben werden kann. Beispielsweise kann die Aufbringvorrichtung in Form einer Rinne an einer Tragvorrichtung derart gelagert werden, dass die Rinne in einer Ebene parallel zur Bauplattform (6) in einer Richtung quer zur Längsrichtung der Rinne über die offene Oberseite des Behälters verschoben werden kann. Zu diesem Zweck kann beispielsweise jedes Ende der Rinne an einer sich parallel zur oder entlang der angrenzenden Behälterwand erstreckenden Führungsschiene verschiebbar gelagert sein. Die Verschiebung erfolgt über eine Verschlebevorrichtung mit einem Antrieb, die beispielsweise in Form einer an sich bekannten Spindel-, Seilzug- oder Kettenvorrichtung zum stufenlosen Parallel-Verschieben der Rinne ausgebildet sein kann.

Bei den kommerziell verfügbaren Vorrichtungen zur Herstellung dreidimensionaler Objekte werden die Linsen üblicherweise gekühlt, um eine Beschädigung durch zu hohe Temperaturen zu vermeiden. Dies hat jedoch den Nachteil, dass sich die Dämpfe bevorzugt an den gekühlten Linsen absetzen. Es wird daher versucht die Linse mit Inertgas so anzuströmen, dass die flüchtigen Bestandtelle sich nicht an der Linse absetzen können.

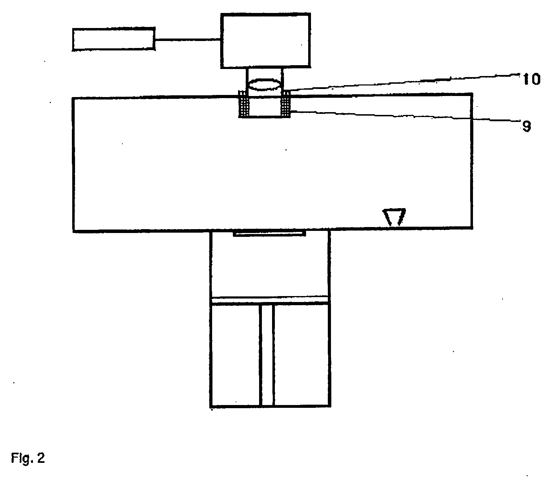

Durch die in Fig. 2 dargestellte Vorrichtung kondensieren die bei der Verarbeitung des polymeren Werkstoffs entstehenden Dämpfe an den zusätzlich installierten gekühlten Abscheideoberflächen (9) und setzen sich dort ab. So wird verhindert, dass diese Dämpfe überhaupt in die Nähe von Linse und Pyrometer gelangen und sich dort absetzen können. Die Geometrie der Abscheideoberfläche wird idealer weise so gewählt, dass eine möglichst große Oberfläche zur Verfügung steht an denen sich die Dämpfe absetzen können. Vorzugsweise Ist die Abscheideoberfläche so zu positionieren, dass eine Reinigung bzw. Ausbau und Reinigung leicht möglich ist. Vorzugsweise sollte die Position der Vorrichtung so gewählt werden, dass die Dämpfe an den gekühlten Flächen vorbeiströmen müssen bevor die Dämpfe mit empfindlichen Bauteilen wie Linse und Pyrometer In Berührung kommen. Die Temperatur der Abscheideoberflächen ist über Kühlelemente (10) so einzustellen, dass sich die Dämpfe an diesen Oberflächen absetzen. Da kalte Bauelemente im Bauraum den Bauprozess stören können, wird die Temperatur an den Kondensationsflächen aber auch nicht viel kälter eingestellt als unbedingt notwendig. Die Temperatur der Flächen liegt zwischen 10°C und 350°C unterhalb der Prozesstemperatur, vorzugsweise zwischen 20°C und 200°C, bevorzugt zwischen 20°C und 180°C, besonders bevorzugt zwischen 30°C und 150°C, ganz besonders bevorzugt zwischen 30°C und 140°C und insbesondere 30°C bis 80°C unterhalb der Prozesstemperatur.

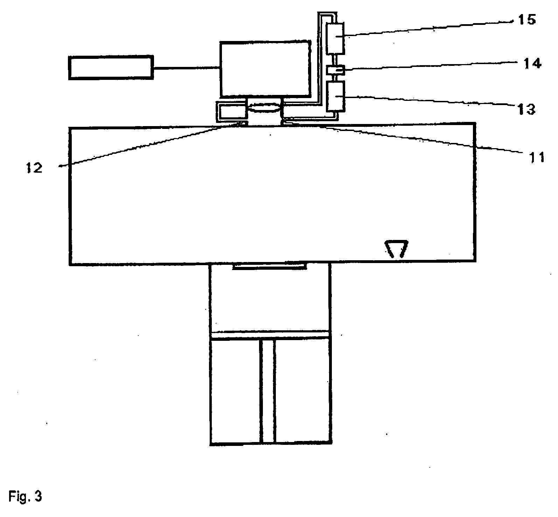

In Fig. 3 ist eine Ausführungsform dargestellt, um ein Absetzen der bei der Verarbeitung des Polymers entstehenden Dämpfe an der Linse oder Pyrometer zu vermelden. Es wird das Gas der Bauraumatmosphäre abgesaugt (11), durch ein beispielsweise rohrförmiges Bauteil als Abscheldeoberfläche (13) mit gekühlten Flächen geleitet, an denen sich die bei dem Prozess entstehenden Dämpfe absetzen können, anschließend wird das Gas wieder in den Bauraum geführt (12). Der Volumenstrom wird mittels einer Strömungsmaschine (14) erzeugt.

Das Gas der Bauraumatmosphäre wird nach dem Absetzen der flüchtigen Bestandteile des Polymers wieder erwärmt (15), bevor es wieder in den Bauraum geleitet wird. Bevor das Gas wieder in den Bauraum geleitet wird, wird es auf eine Temperatur erwärmt, die maximal 30°C unterhalb der Prozesstemperatur liegt. Bevorzugt wird das Gas auf eine Temperatur erwärmt, die maximal 20°C unterhalb der Prozesstemperatur liegt. Besonders bevorzugt wird das Gas auf eine Temperatur erwärmt, die maximal 10°C unterhalb der Prozesstemperatur liegt. Durch diese Maßnahme wird die Störung des Bauprozesses durch erkaltetes Gas im Bauraum minimiert. Diese Ausführungsform hat den Vorteil, dass keine kälteren Bauelemente innerhalb des eigentlichen Bauraums notwendig sind und so der Bauprozess nicht gestört wird.

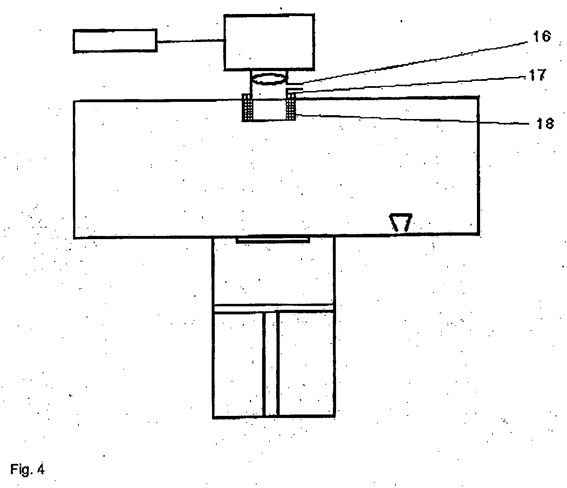

Fig. 4 zeigt eine Vorrichtung, mit der Ablagerungen an Linse und anderen empfindlichen Bauteilen vermieden werden können. Unterhalb des zu schützenden Bauteils, insbesondere der Linse, wird zusätzlich ein Gas eingeleitet (16) welches eine geringere Dichte besitzt als das Gas der Bauraumatmosphäre. Das Gas mit der geringeren Dichte bildet unter dem vor Ablagerung zu schützende Bauteil eine Schutzschicht, welche Ablagerungen verhindert. Für diese Vorrichtung ist es vorteilhaft, wenn sich das zu schützende Bauteil an einer möglichst hohen Position befindet, die von den Gasströmungen im Bauraum möglichst wenig berührt wird, da so die Schutzschicht bestehen bleibt und nicht ständig erneuert werden muss. Als Gas für den Schutzfilm bietet sich aufgrund der geringen Dichte und der Reaktionsträgheit insbesondere Helium an. Der Schutz vor Ablagerungen kann somit erhöht werden, wenn der Schutzfilm aus einem leichten Inertgas (Gas mit gegenüber dem Gas des Bauraums geringerer Dichte) mit den Abscheideoberflächen (18) und Kühlelementen (17) kombiniert wird.

Wenn durch die erfindungsgemäßen Ausführungen die bei der Verarbeitung entstehenden Dämpfe des Polymers aus der Bauraumatmosphäre beseitigt werden, bevor diese sich an der Linse absetzen können, ist es auch nicht mehr unbedingt notwendig, die Linse mit Inertgas zu spülen. Auf die aufwendige Konstruktion zur Linsenspülung kann verzichtet werden. Die Kühlung der Linse kann mittels einfacher Wärmeleitung erfolgen. Das Gas kann zur Inertisierung des Bauraums an einen für den Bauprozess vorteilhafteren Punkt eingeleitet und höher temperiert werden. Das Inertgas wird dabei auf eine Temperatur erwärmt, die maximal 30 °C unterhalb der Prozesstemperatur liegt. Bevorzugt wird das Gas auf eine Temperatur erwärmt, die maximal 20 °C unterhalb der Prozesstemperatur liegt. Besonders bevorzugt wird das Gas auf eine Temperatur erwärmt, die maximal 10 °C unterhalb der Prozesstemperatur liegt. Die optimierte Einleitung von Inertgas erhöht die Prozesssicherheit, da Pulver oder Schmelze nun nicht mehr ungewollt abgekühlt werden.

Der Schutz vor Ablagerungen, insbesondere an Linse und Pyrometer kann zusätzlich erhöht werden, indem bei den erfindungsgemäßen Ausführungen zwischen den empfindlichen Bauteilen, insbesondere der Linse und dem Bauraum eine laserdurchlässige Scheibe vorliegt, die die empfindlichen Teile von der Bauraumatmosphäre trennt. Ablagerungen an der laserdurchlässigen Scheibe können mit den schon genannten erfindungsgemäßen Ausführungen verhindert werden. Von Vorteil ist, wenn die laserdurchlässige Scheibe auf eine Temperatur erwärmt wird, die maximal 20 °C unterhalb der Prozesstemperatur liegt. Besonders vorteilhaft ist, wenn die laserdurchlässige Scheibe auf eine Temperatur erwärmt wird, die maximal 10 °C unterhalb der Prozesstemperatur liegt.

Ebenfalls Gegenstand der vorliegenden Erfindung sind Verfahren nach Anspruch 7 zur schichtweisen Herstellung von dreidimensionalen Objekten, wobei das Verfahren in einer Vorrichtung nach Anspruch 1, durchgeführt wird. Hierbei wird ein durch elektromagnetische Strahlung verfestigbares Material auf die Bauplattform (6) aufgebracht und mit elektromagnetischer Strahlung der Strahlungsquelle (1) bestrahlt Bei den erfindungsgemäßen Verfahren wird die Bauraumatmosphäre von Dämpfen mittels der Abscheideoberfläche, an denen die Dämpfe erkalten und sich absetzen können, gereinigt.

In einer weiteren Ausführungsform des erfindungsgemäßen Verfahrens wird der Bauraum mittels des Heizelementes auf eine Prozesstemperatur erwärmt. Diese Prozesstemperatur liegt üblicherweise im Bereich von 60 bis 400, insbesondere 120 bis 330 und ganz besonders bevorzugt im Bereich von 160 bis 220°C.

In einer Ausführungsform des erfindungsgemäßen Verfahrens wird das Gas der Bauraumatmosphäre aus dem Bauraum geleitet, anschließend an der Abscheideoberfläche vorbeigeführt und anschließend wieder in den Bauraum geleitet. Die Temperatur des wieder in den Bauraum geleiteten Gases liegt vorzugsweise maximal 30°C, insbesondere maximal 20°C und ganz besonders bevorzugt maximal 10°C unterhalb der Prozesstemperatur.

Die Abscheideoberfläche wird in dem erfindungsgemäßen Verfahren in der Regel auf eine Temperatur zwischen 10°C und 350°C, vorzugsweise 20 bis 200°C, bevorzugt 20°C bis 180°C, besonders bevorzugt zwischen 30°C und 150°C, ganz besonders bevorzugt zwischen 30°C und 140°C und insbesondere 30 bis 80°C unterhalb der Prozesstemperatur abgekühlt.

Im Folgenden werden die erfindungsgemäßen Verfahren näher beschrieben, mit denen aus Pulver erfindungsgemäße Formteile hergestellt werden können, ohne dass die Erfindung darauf beschränkt werden soll.

Grundsätzlich eignen sich alle dem Fachmann bekannten Polymerpulver für den Einsatz in der erfindungsgemäßen Vorrichtung bzw. des erfindungsgemäßen Verfahrens. Geeignet sind insbesondere Thermoplaste und Thermoelaste wie beispielsweise Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES)-Copolymer, Mischungen und/oder Polymerblends. Insbesondere bevorzugt umfasst das Polymerpulver mindestens ein Polyamid oder Polyetherketone, insbesondere Polyamid 12, Polyamid 6 oder Polyamid 6.6 oder PEEK, wobei die genannten Polyamide besonders bevorzugt sind.

Im Betrieb werden zunächst in der Regel in einem Rechner aufgrund eines Konstruktionsprogrammes oder dergleichen Daten über die Form des herzustellenden Objekts (5) erstellt bzw. abgespeichert. Diese Daten werden für die Herstellung des Objekts so aufbereitet, dass das Objekt in eine Vielzahl von horizontalen, im Vergleich zur Objektdimension dünnen Schichten zerlegt wird, und die Formdaten beispielsweise in Form von Datensätzen, z. B. CAD-Daten, für jede dieser Vielzahl von Schichten bereitgestellt werden. Die Erstellung und Aufbereitung der Daten für jede Schicht kann dabei vor der Herstellung oder auch gleichzeitig mit der Herstellung jeder Schicht erfolgen.

Anschließend wird zunächst die Bauplattform (6) mittels der Höheneinstellvorrichtung in die höchste Stellung gefahren, in der die Oberfläche der Bauplattform (6) in einer Ebene mit der Oberfläche des Bauraumes (19) liegt, und anschließend um den Betrag der vorgesehenen Dicke der ersten Materialschicht abgesenkt, sodass innerhalb des entstehenden Ausschnitts ein abgesenkter Bereich gebildet ist, der seitlich von den Wänden des Ausschnitts und unten von der Oberfläche der Bauplattform (6) begrenzt ist. Beispielsweise mittels einer Aufbringvorrichtung (7) wird sodann eine erste Schicht des zu verfestigenden Materials mit der vorgesehenen Schichtdicke in den vom Ausschnitt und der Bauplattform (6) gebildeten Hohlraum bzw. den abgesenkten Bereich eingebracht und gegebenenfalls von einer Heizung auf eine geeignete Arbeitstemperatur, beispielsweise 140 °C bis 160 °C, erwärmt. Daraufhin steuert die Steuereinheit (3) die Ablenkeinrichtung derart, dass der abgelenkte Lichtstrahl (2) nacheinander an allen Stellen der Schicht auftrifft und dort das Material sintert bzw. aufschmilzt. Auf diese Weise kann zunächst eine feste Bodenschicht gebildet werden. In einem zweiten Schritt wird die Bauplattform (6) mittels der Höheneinstellvorrichtung um den Betrag einer Schichtdicke abgesenkt und mittels der Aufbringvorrichtung (7) in den damit entstehenden abgesenkten Bereich innerhalb des Ausschnittes eine zweite Materialschicht eingebracht, ggf. wiederum von der Heizung erwärmt. In einer Ausführungsform kann die Ablenkeinrichtung diesmal von der Steuereinheit (3) derart gesteuert werden, dass der abgelenkte Lichtstrahl (2) nur auf dem an die Innenfläche des Ausschnittes angrenzenden Bereich der Materialschicht auftrifft und dort die Materialschicht durch Sintern verfestigt, wodurch eine erste ringförmige Wandschicht mit einer Wandstärke von etwa 2 bis 10 mm entsteht, die das verbleibende pulverförmige Material der Schicht vollständig umgibt Dieser Teil der Steuerung stellt damit eine Einrichtung zum Erzeugen einer das zu bildende Objekt (6) umgebenden Behälterwand gleichzeitig mit der Bildung des Objekts in jeder Schicht dar.

Nach Absenken der Bauplattform (6) um den Betrag der Schichtdicke der nächsten Schicht, Aufbringen des Materials und Aufheizen in der gleichen Weise wie oben kann nun die Herstellung des Objekts (5) selbst beginnen. Hierzu steuert die Steuereinheit (3) die Ablenkeinrichtung derart, dass der abgelenkte Lichtstrahl (2) an solchen Stellen der Schicht auftrifft, die entsprechend den in der Steuereinheit gespeicherten Koordinaten des herzustellenden Objekts (5) verfestigt werden sollen. Bei den weiteren Schichten wird analog vorgegangen. Im Falle der gewünschten Herstellung eines ringförmigen Wandbereichs in Form einer Behälterwand, die das Objekt zusammen mit dem verbleibenden, nicht gesinterten Material umschließt und so beim Absenken der Bauplattform (6) unter den Arbeitstisch ein Austreten, des Materials verhindert, wird bei jeder Objektschicht mittels der Einrichtung eine ringförmige Wandschicht auf die darunterliegende ringförmige Wandschicht aufgesintert. Auf die Erstellung der Wand kann verzichtet werden, wenn ein Wechselbehälter entsprechend EP 1037739 oder ein fest eingebauter Behälter verwendet wird.

Nach Abkühlung kann das gebildete Objekt aus der Vorrichtung entnommen werden.

### Beispiele

Die Beispiele werden der folgenden Beschreibung entsprechend bearbeitet. Die Baukammer wird 180 min auf eine Temperatur vorgeheizt, die 20 °C unterhalb der Prozesstemperatur liegt. Danach wird die Temperatur in der Baukammer auf die Prozesstemperatur erhöht. Die Prozesstemperatur ist abhängig von dem eingesetzten Pulvermaterial. Bei der Verarbeitung von Pulver aus polymeren Werkstoffen muss sichergestellt sein, dass die Temperatur im Baufeld nicht zu stark absinkt, da es sonst zu einem zu starken Verzug der zu erstellenden Bauteilen kommt. Die Verteilung der Temperatur im Bauraum ist nicht immer homogen, daher wird die mittels eines Pyrometers gemessene Temperatur als Bauraum-/Prozesstemperatur definiert. Vor der ersten Belichtung werden 40 Schichten ohne Belichtung aufgetragen. Das zu belichtende Bauteil wird zentral im Baufeld positioniert. Eine quadratische Fläche mit einer Kantenlänge von 100 mm wird mittels des Lasers aufgeschmolzen. Danach wird die Bauplattform (6) um 0,15 mm abgesenkt und mittels eines Beschichters (7) eine neue Pulverschicht mit einer Geschwindigkeit von 100 mm/s aufgetragen. Diese Schritte werden wiederholt bis ein 300 mm hohes dreidimensionales Objekt (5) entsteht. Nach Abschluss der Belichtung werden noch 40 weitere Schichten aufgetragen, bevor die Heizelemente der Vorrichtung ausgeschaltet und die Abkühlphase eingeleitet wird. Die Zeit, die jeweils für eine Schicht benötigt wird, liegt während des gesamten Bauprozesses unterhalb von 40 Sekunden.

Nach einer Abkühlzeit von mindestens 12 Stunden wird das ersteilte Bauteil entnommen und vom anhaftenden Pulver befreit. Die Ablagerungen auf Linse und Pyrometer werden begutachtet Danach werden Linse bzw. Pyrometer mittels eines mit 98% Ethanol getränkten Reinigungspapiers gereinigt. Das Papier wird vor und nach der Reinigung jeweils ohne Ethanol mit der Feinwaage PCE-ABZ 100C von PCE Instruments gewogen. Die Differenz der beiden Wiegungen ergibt die jeweilige Ablagerung auf Linse bzw. Pyrometer.

Die Laserleistung wird in Anlehnung an die ISO 11554 mit dem LM-1000 von der Coherent Deutschland GmbH gemessen, wobei die durchschnitttiche Leistung angegeben wird. Die Messungen werden in einem Labor bei 23°C/50% Luftfeuchtigkeit durchgeführt.

Mittels eines Weißlicht-Interferometer (FRT MicroProf® - Multisensor Surface Metrology Tool) wird der Verzug der Unterseite des erstellten Bauteils ermittelt. Als Maß für den Verzug wird die durchschnittliche Höhendifferenz zwischen dem Mittelpunkt und den Ecken der Unterseite des erstellten Bauteils genommen.

### Beispiel 1. (nicht erfindungsgemäß)

Der Bauprozess wird auf einer EOSINT P380 der Firma EOS GmbH durchgeführt. Verarbeitet wird ein PA12-Pulver mit den Pulverkennwerten aus Tabelle 1. Die Prozesstemperatur beträgt 170 °C. Der Energieeintrag des Lasers beträgt 60 mJ/mm² (Laserleistung 36,0 W, Scangeschwindigkeit 2000 mm/s, Abstand Belichtungslinien 0,3 mm). Es sind starke Ablagerungen nach Ende des Bauprozesses auf Linse und Pyrometer zu erkennen. Ablagerung Linse: 0,009 g. Die Differenz zwischen dem Mittelpunkt und den Ecken der Unterseite des erstellten Bauteils beträgt 0,84mm.

### Beispiel 2 (nicht erfindungsgemäß)

Der Bauprozess wird auf einer SPro60HDHS der Firma 3d-systems durchgeführt. Verarbeitet wird ein PA12-Pulver mit den Pulverkennwerten aus Tabelle 1. Die Prozesstemperatur beträgt 168°C. Der Energieeintrag des Lasers beträgt 36 mJ/mm² (Laserleistung 65,0 W, Scangeschwindigkeit 6000 mm/s, Abstand Belichtungslinien 0,3 mm). Es sind starke Ablagerungen nach Ende des Bauprozesses auf der Linse zu erkennen. Ablagerung Linse: 0,007 g Ablagerung. Die Differenz zwischen dem Mittelpunkt und den Ecken der Unterseite des erstellten Bauteils beträgt 0,71mm.

In den Ausführungsbeispielen 1 und 2 wird versucht die Linse mit Inertgas so anzuströmen, dass die flüchtigen Bestandteile sich nicht an der Linse absetzen können. Wie die nicht erfindungsgemäßen Beispiele 1 und 2 zeigen, gelingt dies nur unzureichend. Das im Vergleich zur Bauraumtemperatur deutlich kältere Inertgas dient auch zur Kühlung der Linse.

### Beispiel 3 (nicht erfindungsgemäß)

Der Bauprozess wird auf einer EOSINT P380 der Firma EOS GmbH durchgeführt. Verarbeitet wird ein PA6-Pulver mit den Pulverkennwerten aus Tabelle 2. Die Prozesstemperatur beträgt 199 °C. Der Energieeintrag des Lasers beträgt 60 mJ/mm² (Laserleistung 36,0 W, Scangeschwindigkeit 2000 mm/s, Abstand Belichtungslinien 0,3 mm). Es sind extrem starke Ablagerungen nach Ende des Bauprozesses auf den Linsen und Pyrometer zu erkennen. Ablagerung je Linse: 0,026 g. Die Differenz zwischen dem Mittelpunkt und den Ecken der Unterseite des erstellten Bauteils beträgt 0,94mm.

### Beispiel 4 (nicht erfindungsgemäß)

Der Bauprozess wird auf einer EOSINT P380 der Firma EOS GmbH durchgeführt. Verarbeitet wird ein PA12-Pulver mit den Pulverkennwerten aus Tabelle 1. Die Prozesstemperatur beträgt 170 °C. Es wird ein gekühlter rechteckiger Hohikörper (9) gemäß Fig. 2 eingebaut, um Ablagerungen an der Linse zu verhindern. Die Wand des rechteckigen Hohlkörpers (Kantenlänge 200 mm, Höhe 70 mm) besteht aus mehreren Lagen Metallgeflecht (Maschenweite 400 µm, 4-lagig, Abstand der einzelnen Lagen zueinander 1 mm, Edelstahl rostfrei). Der rechteckige Hohlkörper aus Metallgeflecht wird mittels Wärmeleitung durch eine geeignete Vorrichtung (10) gekühlt. Die Temperatur des rechteckigen Hohlkörpers (9) beträgt während des Bauprozesses durchschnittlich 128 °C. Der Energieeintrag des Lasers beträgt 60 mJ/mm² (Laserleistung 36,0 W, Scangeschwindigkeit 2000 mm/s. Abstand Belichtungslinien 0,3 mm). Es sind kaum Ablagerungen nach Ende des Bauprozesses auf Linse und Pyrometer zu erkennen. An dem gekühlten rechteckigen Hohlkörper sind hingegen starke Ablagerungen zu erkennen. Ablagerung Linse: 0,002 g. Die Differenz zwischen dem Mittelpunkt und den Ecken der Unterseite des erstellten Bauteils beträgt 0,83mm.

### Beispiel 5 (nicht erfindungsgemäß)

Der Bauprozess wird auf einer SPro60HDHS der Firma 3d-systems durchgeführt. Verarbeitet wird ein PA12-Pulver mit den Pulverkennwerten aus Tabelle 1. Die Prozesstemperatur beträgt 168 °C. Es wird ein rechteckiger Hohlkörper (9) gemäß Fig. 2 eingebaut, um Ablagerungen an der Linse zu verhindern. Die Wand des rechteckigen Hohlkörpers (Kantenlänge 200 mm, Höhe 70 mm) besteht aus mehreren Lagen Metallgeflecht (Maschenweite 400 µm, 4-lagig, Abstand der einzelnen Lagen zueinander 1 mm, Edelstahl rostfrei). Der rechteckige Hohlkörper aus Metallgeflecht wird mittels Wärmeleitung durch eine geeignete Vorrichtung (10) gekühlt Die Temperatur des rechteckigen Hohlkörpers beträgt während des Bauprozesses durchschnittlich 103 °C. Der Energieeintrag des Lasers beträgt 36 mJ/mm² (Laserleistung 65,0 W, Scangeschwindigkeit 6000 mm/s, Abstand Belichtungslinien 0,3 mm). Es sind kaum Ablagerungen nach Ende des Bauprozesses auf der Linse zu erkennen. Ablagerung Linse: 0,001 g. Die Differenz zwischen dem Mittelpunkt und den Ecken der Unterseite des erstellten Bauteils beträgt 0,73mm.

### Beispiel 6 (erfindungsgemäß)

Der Bauprozess wird auf einer EOSINT P380 der Firma EOS GmbH durchgeführt. Verarbeitet wird ein PA12-Pulver mit den Pulverkennwerten aus Tabelle 1. Die Prozesstemperatur beträgt 170°C. Es wird eine Vorrichtung zur Reinigung der Bauraumatmosphäre gemäß Fig. 3 eingebaut Die Vorrichtung besteht aus je einem Rohr um das Gas der Bauraumatmosphäre aus dem Bauraum abzuleiten (11) und nach der Aufbereitung anschließend wieder zuzuleiten (12), wobei die Rohre für die Zu- und Ableitung so positioniert werden, dass sie sich gegenüberstehen. An der Abscheideoberfläche (13) setzen sich die bei der Verarbeitung entstehenden Dämpfe des Polymers ab und reinigen so das Gas der Bauraumatmosphäre von den Dämpfen. Das Bauteil (13) ist rohrförmig ausgeführt mit einem Durchmesser von 120 mm und einer Höhe von 100 mm und wird gekühit, so dass die Temperatur im inneren des Bauteils 108 °C beträgt. In dem Bauteil sind Metallgeflechte (Maschenweite 400 µm, 5 Lagen, 1 mm Abstand zwischen den Lagen, Edelstahl rostfrei) eingebaut. Das Gas wird anschließend mittels eines Heizelements (15) wieder auf eine Temperatur nahe der Prozesstemperatur erwärmt, bevor es wieder in den Bauraum eingeleitet wird. Ein Strömungsmaschine (14) sorgt dafür, dass das Gas der Bauraumatmosphäre zu- und abgeführt wird. Der Energieeintrag des Lasers beträgt 60 mJ/mm² (Laserleistung 36,0 W, Scangeschwindigkeit 2000mm/s, Abstand Belichtungslinien 0,3 mm). Es sind keine Ablagerungen nach Ende des Bauprozesses auf der Linse zu erkennen. An dem gekühlten zylinderförmigen Metallgeflecht im Bauteil (13) sind hingegen starke Ablagerungen zu erkennen. Die Differenz zwischen dem Mittelpunkt und den Ecken der Unterseite des erstellten Bauteils beträgt 0,35mm.

### Beispiel 7 (nicht erfindungsgemäß)

Der Bauprozess wird auf einer EOSINT P360 der Firma EOS GmbH durchgeführt. Verarbeitet wird ein PA12-Pulver mit den Pulverkennwerten aus Tabelle 1. Die Prozesstemperatur beträgt 170 °C. Wie in Fig. 4 dargestellt wird die Linse mit einem geringen Volumenstrom (0,3 l/min) von Helium gespült (16). Der Bauraum wird außerhalb des Baufeldes mit Stickstoffgas inertisiert. Das Stickstoffgas wird auf 162 °C erwärmt bevor es in den Bauraum geleitet wird. Es wird eine rechteckige Abscheideoberfläche (18) eingebaut, um Ablagerungen an der Linse zu verhindern. Die Abscheideoberfläche ist in Form eines Hohlkörpers ausgebildet. Die Wand des rechteckigen Hohlkörpers (Kantenlänge 200 mm, Höhe 70 mm) besteht aus mehreren Lagen Metallgeflecht (Maschenweite 400 µm, 4-lagig, Abstand der einzelnen Lagen zueinander 1 mm, Edelstahl rostfrei). Der rechteckige Hohlkörper aus Metallgeflecht wird mittels Wärmeleitung durch eine geeignete Vorrichtung (17) gekühlt. Die Temperatur des rechteckigen Hohlkörpers beträgt während des Bauprozesses durchschnittlich 126 °C. Der Energieeintrag des Lasers beträgt 60 mJ/mm² (Laserleistung 36.0 W, Scangeschwindigkeit 2000 mm/s, Abstand Belichtungslinien 0,3 mm). Es sind kaum Ablagerungen nach Ende des Bauprozesses auf Linse und Pyrometer zu erkennen. Ablagerung Linse: 0,001 g. Die Differenz zwischen dem Mittelpunkt und den Ecken der Unterseite des erstellten Bauteils beträgt 0.42mm.

### Beispiel 8 (nicht erfindungsgemäß)

Der Bauprozess wird auf einer EOSINT P380 der Firma EOS GmbH durchgeführt. Verarbeitet wird ein PA6-Pulver mit den Pulverkennwerten aus Tabelle 2. Die Prozesstemperatur beträgt 199 °C. Ähnlich wie in Fig. 4 dargestellt wird die Linse mit einem geringen Volumenstrom (0,3 l/min) von Helium gespült. Der Bauraum wird außerhalb des Baufeldes mit Stickstoffgas inertisiert Das Stickstoffgas wird auf 192 °C erwärmt bevor es in den Bauraum geleitet wird. Der Energieeintrag des Lasers beträgt 60 mJ/mm² (Laserleistung 36,0 W, Scangeschwindigkeit 2000 mm/s, Abstand Belichtungslinien 0,3 mm). Während der Verarbeitung kommt es zu einer starken Qualmbildung. Es sind kaum Ablagerungen nach Ende des Bauprozesses auf den Linsen zu erkennen. Ablagerung je Linse: 0,002 g. Die Differenz zwischen dem Mittelpunkt und den Ecken der Unterseite des erstellten Bauteils beträgt 0,48mm.

Bei den Beispielen 4-8 ist unter vergleichbaren Bedingungen eine deutlich geringere Verschmutzung der Linse als bei den Beispielen 1-3 zu erkennen. Der Verzug der erstellten Bauteile in den Beispielen 4-8 ist zudem nicht signifikant höher, obwohl in den Beispielen 4-8 gekühlte Oberflächen eingesetzt werden. In den Beispielen 6-8 konnte der Verzug des erstellten Bauteils sogar deutlich reduziert werden.

**Tabelle 1: Pulverkennwerte von PA12-Pulver**

| | Wert | Einheit | Prüfart/Prüfgerät/Prüfparameter |
|---|---|---|---|
| Schüttdichte | 0,483 | g/cm³ | DIN EN ISO 60 |
| Korngröße d50 | 66 | µm | Malvern Mastersizer 2000, Trockenmessung, 20-40g Pulver mittels Scirocco Trockendispergiergerät zudosiert. Zuführrate Rüttelrinne 70%, Dispergierluftdruck 3 bar, Die Messzeit der Probe 5 Sekunden (5000 Einzelmessungen), Brechungsindex und Blaullchtwert mit 1,52 festgelegt. Auswertung über Mie-Theorie |
| Korngröße d10 | 36 | µm | Malvern Mastersizer 2000, Parameter siehe Korngröße d50 |
| Korngröße d90 | 78 | µm | Malvern Mastersizer 2000, Parameter siehe Korngröße d50 |
| <10,48µm | 1,4 | % | Malvern Masterslzer 2000, Parameter siehe Korngröße d50 |
| Rieselfähigkeit | 27 | s | DIN EN ISO 6186, Verfahren A, Durchmesser Düsenauslauf 15mm |
| Lösungsviskosität | 1,60 | - | ISO 307, Schott AVS Pro. Lösemittel m-Kresol sauer, Volumetrisches Verfahren, Doppelbestimmung, Lösetemperatur 100°C, Lösezeit 2h. Polymerkonzentration 5g/l Messtemperatur 25°C |
| BET (spez. Oberfläche) | 5,7 | m²/g | ISO 9277, Micromeritics TriStar 3000. Gasadsorption von Stickstoff, diskontinuierlichen volumetrischen Verfahren, 7 Messpunkte bei Relativdrücken P/P0 zwischen ca. 0,05 und ca. 0,20, Kalibrierung des Totvolumens mittels He(89,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmetzpunkt 1. Aufheizung | 186 | °C | DIN 53765 DSC 7 v. Perkin Einer Heiz-/Kühlrate 20K/min |
| Rekristallisationstemperatur | 141 | °C | DIN 53765 DSC 7 v. Perkin Eimer Heiz-/Kühlrate 20K/min |
| Materialkonditionierung | Material wird vor Ver erbeltung 24h bei 23°C und 50% Luftfeuchtigkeit gelagert | | |

**Tabelle 2: Pulverkennwerte von PA6-Pulver**

| | Wert | Einheit | Prüfart/Prüfgerät/Prüfparameter |
|---|---|---|---|
| Schüttdichte | 0,468 | g/cm³ | DIN EN ISO 60 |
| Korngröße d50 | 64 | µm | Malvem Mastersizer 2000, Trockenmessung, 20-40g Pulver mittels Scirocco Trockendispergiergerät zudosiert. Zuführrate Rüttelrinne 70%, Dispergierluftdruck 3 bar. Die Messzeit der Probe 5 Sekunden (5000 Einzelmessungen), Breohungsindex und Blaulichtwert mit 1,52 festgelegt. Auswertung über Mie-Theorie |
| Korngröße d10 | 35 | µm | Malvern Mastersizer 2000, Parameter siehe Korngröße d50 |
| Korngröße d90 | 64 | µm | Malvern Mastersizer 2000, Parameter siehe Korngröße d50 |
| <10,48µm | 1,5 | % | Malvern Mastersizer 2000, Parameter siehe Korngröße d50 |
| Rieselfähigkeit | 29 | s | DIN EN ISO 6186. Verfahren A, Durchmesser Düsenauslauf 15mm |
| Lösungsviskosität | 1.63 | - | ISO 307, Schott AVS Pro, Lösemittel *Schwefelsäure,* Volumetrisches Verfahren, Doppelbestimmung, Lösetemperatur 100°C, Lösezeit 2h, Polymerkonzentration 5g/l Messtemperatur 25°C |
| BET (spez. Oberfläche) | 0,7 | m²/g | ISO 9277, Micromeritics TriStar 3000, Gasadsorption von Stickstoff, diskontinuierlichen volumetrischen Verfahren, 7 Messpunkte bei Relativdrücken P/PO zwischen ca. 0,05 und ca. 0,20, Kallbrlerung des Totvolumens mittels He(99,996 %), Probenvorbereitung 1 h bei 23°C + 16 h bei 80°C unter Vakuum, spez. Oberfläche auf die entgaste Probe bezogen, Auswertung erfolgte mittels Mehrpunktbestimmung |
| Schmelzpunkt 1. Aufheizung | 216 | °C | DIN 53765 DSC 7 v. Perkin Elmar Heiz-/KGhlrate 20K/min |
| Rekristallisationstemperatur | 168 | °C | DIN 53765 DSC 7 v. Perkin Elmer Heiz-/K0hirate 20K/min |
| Matedalkonditionierung | Material wird vor Verarbeitung 24h bei 23°C und 50% Luftfeuchtigkeit gelagert | | |

## Patentansprüche

1. Vorrichtung zur schichtweisen Herstellung von dreidimensionalen Objekten aus polymerem Werkstoff umfassend einen Bauraum (19) mit einer höheneinstellbaren Bauplattform (6), einer Vorrichtung (7) zum Aufbringen einer Schicht eines durch Einwirkung elektromagnetischer Strahlung verfestigbaren Materials auf die Bauplattform (6), einer Bestrahlungseinrichtung umfassend eine elektromagnetische Strahlung emittierende Strahlungsquelle (1), eine Steuerungseinheit (3) und eine im Strahlengang der elektromagnetischen Strahlung befindliche Linse (8), zum Bestrahlen von dem Objekt (5) entsprechenden Stellen der Schicht, wobei die Vorrichtung mindestens eine außerhalb des Bauraums befindliche gekühlte Abscheideoberfläche (9, 13, 18) aufweist, wobei die Vorrichtung eine Rohrleitung aufweist, mit der das Gas der Bauraumatmosphäre aus dem Bauraum geleitet, anschließend an der Abscheideoberfläche (13) vorbeigeführt und anschließend das Gas wieder in den Bauraum geleitet wird, und wobei die Rohrleitung ein Heizelement (15) zur Temperierung des wieder in den Bauraum geleiteten Gases aufweist.

2. Vorrichtung nach Anspruch 1, **dadurch gekennzeichnet, dass** die Vorrichtung ein Heizelement zur Temperierung des Bauraums aufweist.

3. Vorrichtung nach einem oder mehreren der vorherigen Ansprüche **dadurch gekennzeichnet, dass** die Abscheideoberfläche größer als 10000 mm² ist.

4. Vorrichtung nach einem oder mehreren der vorherigen Ansprüche **dadurch gekennzeichnet, dass** die Abscheideoberfläche ein geometrischer Körper ist, bei dem das Oberfläche-zu-Volumen-Verhältnis größer als 1 mm⁻¹ ist.

5. Vorrichtung nach einem oder mehreren der vorherigen Ansprüche **dadurch gekennzeichnet, dass** unterhalb der Linse zusätzlich eine Einrichtung (16) zur Einleitung eines Gases, welches eine geringere Dichte besitzt als das Gas der Bauraumatmosphäre, angebracht ist.

6. Vorrichtung nach einem oder mehreren der vorherigen Ansprüche **dadurch gekennzeichnet, dass** zwischen der Linse (8) und dem Bauraum (19) eine laserdurchlässige Scheibe vorliegt.

7. Verfahren zur schichtweisen Herstellung von dreidimensionalen Objekten aus polymerem Werkstoff, wobei das Verfahren in einer Vorrichtung gemäß einem der vorherigen Ansprüche durchgeführt wird, und wobei das durch elektromagnetische Strahlung verfestigbare Material auf die Bauplattform (6) aufgebracht und mit elektromagnetischer Strahlung der Strahlungsquelle (1) bestrahlt wird, wobei das Gas der Bauraumatmosphäre aus dem Bauraum geleitet wird, anschließend an der Abscheideoberfläche (13) vorbeigeführt wird durch das Heizelement (15) wider erwärmt wird und anschließend das Gas wieder in den Bauraum geleitet wird.

8. Verfahren nach Anspruch 7, **dadurch gekennzeichnet, dass** der Bauraum mittels eines Heizelementes auf eine Prozesstemperatur erwärmt wird.

9. Verfahren nach Anspruch 8, **dadurch gekennzeichnet, dass** die Prozesstemperatur von 60 bis 400 °C beträgt.

10. Verfahren nach einem der Ansprüche 7 bis 9, **dadurch gekennzeichnet, dass** die Temperatur des wieder in den Bauraum geleiteten Gases maximal 30°C unterhalb der Prozesstemperatur liegt.

11. Verfahren nach einem oder mehreren der Ansprüche 7 bis 10, **dadurch gekennzeichnet, dass** die Abscheideoberfläche auf eine Temperatur zwischen 10°C und 350°C unterhalb der Prozesstemperatur abgekühlt wird.

12. Verwendung einer Vorrichtung nach einem der Ansprüche 1 bis 6 zur schichtweisen Herstellung von dreidimensionalen Objekten aus polymerem Werkstoff

## Claims

1. Apparatus for the layer-by-layer production of three-dimensional objects of polymeric material comprising a construction chamber (19) with an adjustable-height construction platform (6), and with an apparatus (7) for applying, onto the construction platform (6), a layer of a material hardenable by exposure to electromagnetic radiation, and with irradiation equipment comprising a radiation source (1) emitting electromagnetic radiation, and comprising a control unit (3), and comprising a lens (8) located in the beam path of the electromagnetic radiation, for the irradiation of points corresponding to the object (5) in the layer, wherein the apparatus has at least one cooled deposition surface (9, 13, 18) located outside of the construction chamber, wherein the apparatus has piping with which the gas of the construction-chamber atmosphere is conducted out of the construction chamber, and is then conducted past the deposition surface (13), and is then conducted back into the construction chamber, and wherein the piping has a heating element (15) for controlling the temperature of the gas conducted back into the construction chamber.

2. Apparatus according to Claim 1, **characterized in that** the apparatus has a heating element for controlling the temperature of the construction chamber.

3. Apparatus according to one or more of the preceding claims, **characterized in that** the deposition surface is larger than 10 000 mm².

4. Apparatus according to one or more of the preceding claims, **characterized in that** the deposition surface is a geometric body in which the surface-to-volume ratio is greater than 1 mm⁻¹.

5. Apparatus according to one or more of the preceding claims, **characterized in that** a device (16) for introducing a gas is also mounted below the lens and has lower density than the gas of the construction-chamber atmosphere.

6. Apparatus according to one or more of the preceding claims, **characterized in that** there is a laser-permeable panel between the lens (8) and the construction chamber (19).

7. Process for the layer-by-layer production of three-dimensional objects of polymeric material, where the process is carried out in an apparatus according to one of the preceding claims, and where the material hardenable by electromagnetic radiation is applied onto the construction platform (6) and is irradiated with electromagnetic radiation from the radiation source (1), wherein the gas of the construction-chamber atmosphere is conducted out of the construction chamber, and is then conducted past the deposition surface (13) and heated again by means of the heating element (15), and is then conducted back into the construction chamber.

8. Process according to Claim 7, **characterized in that** the construction chamber is heated by means of a heating element to a process temperature.

9. Process according to Claim 8, **characterized in that** the process temperature is from 60 to 400°C.

10. Process according to one of Claims 7 to 9, **characterized in that** the temperature of the gas conducted back into the construction chamber is at most 30°C below the process temperature.

11. Process according to one or more of Claims 7 to 10, **characterized in that** the deposition surface is cooled to a temperature which is from 10°C to 350°C below the process temperature.

12. Use of an apparatus according to one of Claims 1 to 6 for the layer-by-layer production of three-dimensional objects of polymeric material.

## Revendications

1. Dispositif pour la fabrication par couches d'objets tridimensionnels en matériau polymère, comprenant un espace de construction (19) présentant une plate-forme de construction (6) réglable en hauteur, un dispositif (7) pour appliquer une couche d'un matériau pouvant être solidifié sous l'effet d'un rayonnement électromagnétique sur la plate-forme de construction (6), un dispositif d'irradiation comprenant une source de rayonnement (1) émettant un rayonnement électromagnétique, une unité de commande (3) et une lentille (8) se trouvant dans le trajet du rayonnement électromagnétique, pour irradier des sites de la couche correspondant à l'objet (5),
le dispositif présentant au moins une surface de séparation (9, 13, 18) refroidie se trouvant en dehors de l'espace de construction, le dispositif présentant une conduite tubulaire, par laquelle le gaz de l'atmosphère de l'espace de construction est guidé hors de l'espace de construction, ensuite passé le long de la surface de séparation (13) et ensuite de nouveau guidé dans l'espace de construction et la conduite tubulaire présentant un élément chauffant (15) pour la régulation thermique du gaz de nouveau guidé dans l'espace de construction.

2. Dispositif selon la revendication 1, **caractérisé en ce que** le dispositif présente un élément chauffant pour la régulation thermique de l'espace de construction.

3. Dispositif selon l'une ou plusieurs des revendications précédentes, **caractérisé en ce que** la surface de séparation est supérieure à 10.000 mm².

4. Dispositif selon l'une ou plusieurs des revendications précédentes, **caractérisé en ce que** la surface de séparation est un corps géométrique pour lequel le rapport surface-à-volume est supérieur à 1 mm⁻¹.

5. Dispositif selon l'une ou plusieurs des revendications précédentes, **caractérisé en ce qu'**un dispositif (16) destiné à introduire un gaz qui présente une densité inférieure à celle du gaz de l'atmosphère de l'espace de construction est en plus disposé sous la lentille.

6. Dispositif selon l'une ou plusieurs des revendications précédentes, **caractérisé en ce qu'**une plaquette transparente au laser se trouve entre la lentille (8) et l'espace de construction (19).

7. Procédé pour la fabrication par couches d'objets tridimensionnels en matériau polymère, le procédé étant réalisé dans un dispositif selon l'une quelconque des revendications précédentes, le matériau pouvant être solidifié par un rayonnement électromagnétique étant appliqué sur la plate-forme de construction (6) et irradié par le rayonnement électromagnétique de la source de rayonnement (1), le gaz de l'atmosphère de l'espace de construction étant guidé hors de l'espace de construction, ensuite passé le long de la surface de séparation (13), de nouveau réchauffé par l'élément chauffant (15) et ensuite de nouveau guidé dans l'espace de construction.

8. Procédé selon la revendication 7, **caractérisé en ce que** l'espace de construction est chauffé au moyen d'un élément chauffant à une température du procédé.

9. Procédé selon la revendication 8, **caractérisé en ce que** la température de procédé est de 60 à 400°C.

10. Procédé selon l'une quelconque des revendications 7 à 9, **caractérisé en ce que** la température du gaz de nouveau introduit dans l'espace de construction se situe à au maximum 30°C sous la température de procédé.

11. Procédé selon l'une ou plusieurs des revendications 7 à 10, **caractérisé en ce que** la surface de séparation est refroidie à une température entre 10°C et 350°C sous la température de procédé.

12. Utilisation d'un dispositif selon l'une quelconque des revendications 1 à 6 pour la fabrication par couches d'objets tridimensionnels en matériau polymère.
